# FASCICULE DE BREVET EUROPEEN

(11) **EP 3 253 124 B1**
(45) Date de publication et mention de la délivrance du brevet: **30.06.2021**
(21) Numéro de dépôt: 17173517.8
(22) Date de dépôt: 30.05.2017
(51) Int. Cl.: H04W 36/30, H04B 7/185

(54) **PROCÉDÉ DE CONTRÔLE D'UN RÉSEAU SATELLITAIRE ET DISPOSITIFS ASSOCIÉS**
KONTROLLVERFAHREN EINES SATELLITENNETZES, UND ENTSPRECHENDE VORRICHTUNGEN
METHOD FOR CONTROLLING A SATELLITE NETWORK AND ASSOCIATED DEVICES

(30) Priorité: 31.05.2016 FR 1600883
(43) Date de publication de la demande: 06.12.2017
(73) Titulaire: THALES, 92400 Courbevoie (FR)
(72) Inventeur: TOURET, Marc, 92622 Gennevilliers Cedex (FR); CHEVALLIER, Michel, 92622 Gennevilliers Cedex (FR); SOULIE, Antoine, 92622 Gennevilliers Cedex (FR)
(74) Mandataire: Lavoix

(56) Documents cités:
- EP-A1- 0 920 143
- EP-A1- 2 384 054
- US-A1- 2014 287 761

## Description

La présente invention concerne un procédé de contrôle d'un réseau satellitaire. La présente invention se rapporte également à un contrôleur de réseau et un réseau satellitaire associés.

Il est souhaitable d'assurer une continuité de services entre des zones de couvertures distinctes d'un satellite pour un porteur mobile et ce, malgré la mobilité importante de celui-ci.

Les documents US 2014/287761 A1 et EP 2 384 054 A1 décrivent un basculement entre plusieurs réseaux.

Dans l'état de la technique, il est utilisé la position du porteur pour déterminer la zone de couverture appropriée, ce qui implique que la position du porteur est connue du réseau satellitaire. Ceci n'est pas désirable ou possible pour certains cas d'application.

Aussi, il existe donc un besoin pour un procédé de contrôle d'un réseau satellitaire utilisé par un porteur pouvant fonctionner sans la fourniture de la position du porteur.

La présente description décrit un procédé de contrôle d'un réseau satellitaire selon la revendication 1.

Suivant des aspects particuliers, le procédé comprend une ou plusieurs des caractéristiques des revendications 2 à 5, prise(s) isolément ou suivant toutes les combinaisons techniquement possibles.

Suivant un aspect particulier du procédé, les informations ne contiennent pas la position du porteur.

La présente description se rapporte aussi à un contrôleur de réseau selon la revendication 6.

Suivant un aspect particulier, le contrôleur de réseau est selon la revendication 7.

La présente description se rapporte aussi à un réseau satellitaire selon la revendication 8.

D'autres caractéristiques et avantages de l'invention apparaîtront à la lecture de la description qui suit de modes de réalisation de l'invention, la description étant donnée à titre d'exemple uniquement et en référence aux dessins qui sont :
- figure 1, une vue schématique d'un réseau satellitaire, et
- figure 2, un exemple de mise en œuvre d'un procédé de contrôle du réseau satellitaire.

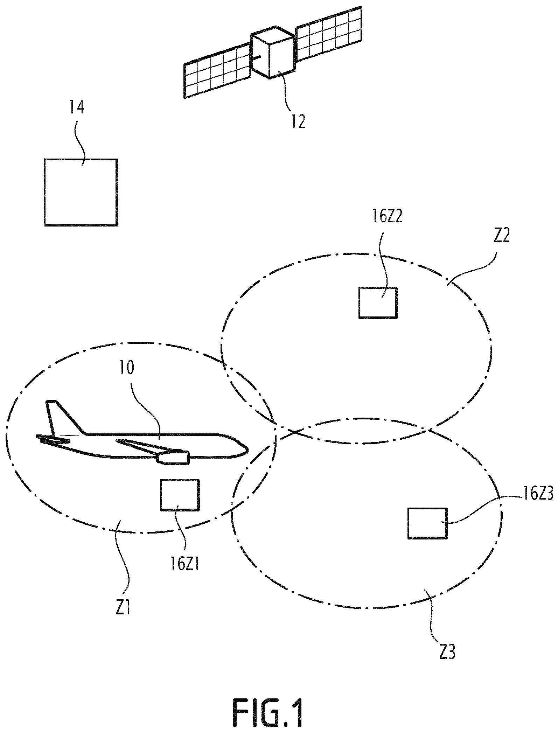

Un réseau satellitaire est représenté à la figure 1.

Le réseau satellitaire comporte un porteur 10, un satellite 12, un contrôleur de réseau 14 et des sous-réseaux.

Le porteur 10 est un moyen de transport.

Par exemple, le porteur 10 est un aéronef comme représenté sur la figure 1.

Un aéronef est un moyen de transport capable de s'élever et de se mouvoir en altitude, au sein de l'atmosphère terrestre. Par exemple, l'aéronef est un avion ou un hélicoptère.

Selon un autre exemple, le porteur 10 est un véhicule terrestre.

Le porteur 10 est considéré du point de vue du réseau satellitaire comme un terminal. Le terminal est désigné sous l'acronyme NM qui renvoie à la terminologie anglaise de « *Network Member*» traduit littéralement en français par « membre du réseau ».

Le porteur 10 appartient à un instant donné à un unique sous-réseau.

Le porteur 10 est propre à émettre un signal de synchronisation dans un sous-réseau spécifique. Le signal de synchronisation est noté SYNC.

Dans un tel exemple, le signal de synchronisation SYNC est émis avec la modulation et le codage le plus robuste possible afin que le contrôleur de réseau 14 puisse le décoder indépendamment des conditions de transmission.

Le satellite 12 est propre à assurer les communications entre chaque élément appartenant à un sous-réseau.

Par simplification, dans le réseau proposé, le réseau est formé par trois sous-réseaux distincts.

Toutefois, le nombre de sous-réseaux formant le réseau est indifférent, de sorte que, selon un autre mode de réalisation, le nombre de sous-réseaux est relativement grand, par exemple, supérieur à 15.

Pour la suite, le premier sous-réseau est noté SATVLAN 1, le deuxième sous-réseau est noté SATVLAN 2 et le troisième sous-réseau est noté SATVLAN 3.

Chaque sous-réseau SATVLAN 1, SATVLAN 2 et SATVLAN 3 a sa propre ressource en puissance et en fréquence. La ressource propre en puissance et en fréquence de chaque sous-réseau SATVLAN 1, SATVLAN 2 et SATVLAN 3 est réalisé par un partage de la bande-passante disponible effectué en amont, par exemple une équirépartition.

Chaque sous-réseau SATVLAN 1, SATVLAN 2 et SATVLAN 3 couvre une zone de couverture prédéfinie.

En particulier, chaque sous-réseau SATVLAN 1, SATVLAN 2 et SATVLAN 3 est propre à communiquer avec le porteur 10 sur sa zone de couverture.

Chacune de ces zones de couverture est représentée schématiquement sur la figure 1. Plus précisément, la première zone Z1 est couverte par le premier sous-réseau SATVLAN 1, la deuxième zone Z2 est couverte par le deuxième sous-réseau SATVLAN 2 et la troisième zone Z3 est couverte par le troisième sous-réseau noté SATVLAN 3.

Chaque sous-réseau SATVLAN 1, SATVLAN 2 et SATVLAN 3 est contrôlé par un contrôleur de sous-réseau respectif, à savoir respectivement le premier contrôleur de sous-réseau 16Z1, le deuxième contrôleur de sous-réseau 16Z2 et le troisième contrôleur de sous-réseau 16Z3.

Dans la suite, seul le premier contrôleur de sous-réseau 16Z1 est décrit en détail, les mêmes remarques s'appliquant sur les deux autres contrôleurs de sous-réseau 16Z2 et 16Z3.

Le premier contrôleur de sous-réseau 16Z1 est désigné sous l'acronyme NC qui renvoie à la terminologie anglaise de « *Network Controller* » traduit littéralement en français par « contrôleur de réseau ».

Le premier contrôleur de sous-réseau 16Z1 est propre à contrôler le premier sous-réseau SATVLAN 1.

Le premier contrôleur de sous-réseau 16Z1 est propre à déterminer les ressources consommées par le premier sous-réseau SATVLAN 1.

Une telle détermination est, par exemple, mise en œuvre en étudiant les demandes de ressources de chaque terminal NM faisant partie du premier sous-réseau SATVLAN 1.

A la demande du contrôleur de réseau 14, le premier contrôleur de sous-réseau 16Z1 est propre à demander au porteur 10 d'émettre un signal de synchronisation SYNC dans les sous-réseaux adjacents.

Le signal de synchronisation SYNC assure la synchronisation entre le porteur 10 et un sous-réseau particulier.

Deux sous-réseaux sont adjacents si les zones de couverture associées au deux sous-réseaux considérées sont adjacentes ou voisines, c'est-à-dire que les frontières des zones de couvertures ont au moins une zone géographique commune.

En l'occurrence, à la demande du contrôleur de réseau 14, le premier contrôleur de sous-réseau 16Z1 est propre à demander au porteur 10 d'émettre des signaux de synchronisation dans le deuxième sous-réseau SATVLAN 2. Le premier contrôleur de sous-réseau 16Z1 est propre à demander au porteur 10 d'émettre des signaux de synchronisation dans le troisième sous-réseau SATVLAN 3.

Le premier contrôleur de sous-réseau 16Z1 est propre à estimer la qualité de transmission des signaux de synchronisation SYNC émis par le porteur 10 dans le SATVLAN1.

Le premier contrôleur de sous-réseau 16Z1 est propre à envoyer au contrôleur de réseau 14 des rapports sur la qualité de la transmission des signaux de synchronisation émis par le porteur 10 dans SATVLAN1.Le premier contrôleur de sous-réseau 16Z1 est généralement situé au niveau d'une passerelle de communication (aussi désignée par le terme « hub ») faisant partie du premier sous-réseau SATVLAN 1.

Le contrôleur de réseau 14 est distinct de chaque contrôleur de sous-réseau 16Z1, 16Z2 et 16Z3.

Le contrôleur de réseau 14 dispose d'informations sur le réseau dans sa globalité.

En particulier, selon l'exemple représenté, le contrôleur 14 connaît la connexité spatiale des trois sous-réseaux SATVLAN 1, SATVLAN 2 et SATVLAN 3 et les trois contrôleurs de sous-réseaux 16Z1, 16Z2 et 16Z3 auxquels les trois sous-réseaux SATVLAN 1, SATVLAN 2 et SATVLAN 3 sont respectivement associés.

Par connexité spatiale, il est entendu, par exemple, que le contrôleur de réseau 14 dispose d'informations permettant de déterminer les sous-réseaux adjacents d'un sous-réseau donné.

Le contrôleur de réseau 14 est propre à émettre un ordre au premier contrôleur de sous-réseau 16Z1 pour que le premier contrôleur de réseau 16Z1 demande au porteur 10 d'émettre des signaux de synchronisation dans les sous-réseaux adjacents SATVLAN 2 et SATVLAN 3.

Le contrôleur de réseau 14 est propre à recevoir de chaque contrôleur de sous-réseau 16Z1, 16Z2 et 16Z3 des informations sur les capacités disponibles sur chaque sous-réseau SATVLAN 1, SATVLAN 2 et SATVLAN 3.

Le contrôleur de réseau 14 est propre à recevoir de chaque contrôleur de sous-réseau 16Z1, 16Z2 et 16Z3 des informations sur la qualité de la transmission du porteur 10 dans leur sous-réseau respectif.

Par exemple, le contrôleur de réseau 14 est propre à recevoir une information sur l'état de la liaison entre le porteur 10 et le sous-réseau auquel appartient le porteur 10.

Selon un autre exemple ou en complément, le contrôleur de réseau 14 est propre à obtenir la valeur d'énergie par bit ramenée à la densité spectrale de puissance de bruit. Une telle valeur est souvent notée Eb/No.

La réception de telles informations est régulière. Par exemple, la réception est mise en œuvre toutes les secondes.

L'ensemble des informations sur la qualité de la transmission du porteur 10 émises par un contrôleur de sous-réseau 16Z1, 16Z2 et 16Z3 forme un rapport de transmission.

Le contrôleur 14 est propre à consolider les rapports de transmission issus des contrôleurs de sous-réseaux 16Z1, 16Z2 et 16Z3.

Le contrôleur 14 est propre à fournir les créneaux d'émission (aussi noté « slot » dans la terminologie anglaise) pour les signaux de synchronisation SYNC sur les sous-réseaux adjacents.

Le contrôleur 14 est propre à prendre la décision que le porteur 10 bascule de sous-réseaux SATVLAN 1, SATVLAN 2 et SATVLAN 3 en fonction des rapports de transmission et des capacités disponibles sur les sous-réseaux SATVLAN 1, SATVLAN 2 et SATVLAN 3.

Un tel changement est appelé sous le terme anglais de « handover » qui signifie « transfert intracellulaire ».

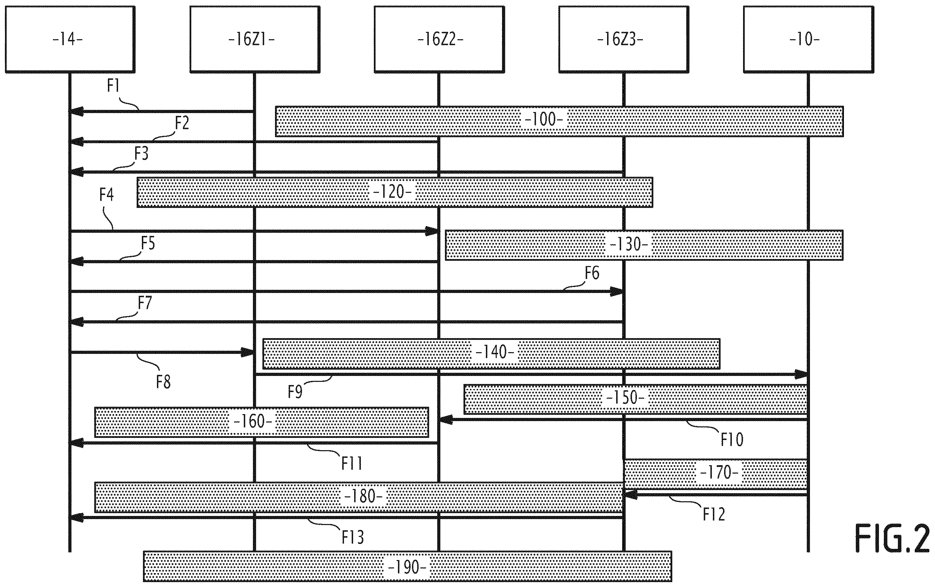

Le fonctionnement du réseau satellitaire est maintenant décrit en référence à la figure 2 qui représente un exemple de mise en œuvre d'un procédé de contrôle du réseau.

A l'état initial, il est supposé que le porteur 10 appartient au premier sous-réseau SATVLAN 1. Le premier sous-réseau SATVLAN 1 est dit réseau actuel.

Le contrôleur de réseau 14 reçoit des informations 100 provenant de chacun des contrôleurs de sous-réseaux 16Z1, 16Z2 et 16Z3 ainsi que l'indique respectivement les flèches F1, F2 et F3 sur la figure 2.

Les informations 100 comprennent dans le cas de la figure 2 la capacité disponible de chaque sous-réseau SATVLAN 1, SATVLAN 2 et SATVLAN 3 et la qualité des transmissions du porteur 10.

Plus précisément, selon l'exemple considéré, les informations sont la capacité disponible des autres sous-réseaux SATVLAN 2 et SATVLAN 3 et la qualité de la transmission du porteur 10 sur le premier sous-réseau SATVLAN 1.

Le contrôleur de réseau 14 détecte ainsi que le porteur 10 voit sa qualité de transmission se dégrader. Une telle dégradation a notamment lieu lorsque le porteur 10 s'approche de l'extrémité de la première zone Z1.

Le contrôleur de réseau 14 détermine aussi que le deuxième sous-réseau SATVLAN 2 et le troisième sous-réseau SATVLAN 3 ont les capacités disponibles pour accueillir le porteur 10.

La détection et la détermination précédentes sont représentées schématiquement par un cadre dont le signe de référence est 120.

Le contrôleur de réseau 14 a alors un premier échange avec le deuxième contrôleur de sous-réseau 16Z2, l'échange étant symbolisé par les deux flèches F4 et F5.

Le contrôleur de réseau 14 a également un deuxième échange avec le troisième contrôleur de sous-réseau 16Z3, l'échange étant symbolisé par les deux flèches F6 et F7.

Chacun des premier et deuxième échanges a pour objet un ordre correspondant à une demande de ressources pour émission d'un signal de synchronisation. La demande est représentée schématiquement par un cadre dont le signe de référence est 130.

Ainsi que l'indique la flèche F8 sur la figure 2, le contrôleur de réseau 14 ordonne alors au premier contrôleur de sous-réseau 16Z1 de demander au porteur 10 d'émettre un signal de synchronisation SYNC sur le deuxième sous-réseau SATVLAN 2 et sur le troisième sous-réseau SATVLAN 3.

Comme l'illustre la flèche F9 et le cadre dont le signe de référence est 140, le premier contrôleur de sous-réseau 16Z1 demande au porteur 10 d'émettre un signal de synchronisation SYNC sur le deuxième sous-réseau SATVLAN 2 et sur le troisième sous-réseau SATVLAN 3. Une telle demande est effectuée par transmission de la commande du contrôleur de réseau 14.

Comme l'indique la flèche F10 et le cadre dont le signe de référence est 150, le porteur 10 émet un signal de synchronisation SYNC sur le deuxième sous-réseau SATVLAN 2.

Le deuxième contrôleur de sous-réseau 16Z2 mesure la qualité de transmission du signal de synchronisation SYNC, pour obtenir une qualité mesurée.

Par exemple, l'atténuation en puissance du signal de synchronisation SYNC est mesurée et/ou le rapport signal à bruit Eb/No est mesuré.

Le deuxième contrôleur de sous-réseau 16Z2 émet alors un rapport de transmission du signal de synchronisation SYNC sur le deuxième sous-réseau SATVLAN 2, le rapport de transmission comprenant la qualité mesurée, c'est-à-dire l'ensemble des mesures effectuées précédemment. Cette émission à direction du contrôleur de réseau 14 est indiquée par la flèche F11 et le cadre dont le signe de référence est 150.

Similairement, comme l'indique la flèche F12 et le cadre dont le signe de référence est 170, le porteur 10 émet un signal de synchronisation SYNC sur le troisième sous-réseau SATVLAN 3.

Le troisième contrôleur de sous-réseau 16Z3 émet alors un rapport de transmission du signal de synchronisation SYNC sur le troisième sous-réseau SATVLAN 3. Cette émission à direction du contrôleur de réseau 14 est indiquée par la flèche F13 et le cadre dont le signe de référence est 180.

Le contrôleur de réseau 14 prend alors la décision d'un éventuel basculement du porteur depuis le sous-réseau actuel sur un autre sous-réseau sur la base des informations fournies et des rapports de transmission. Cette étape est schématisée sur la figure 2 par un cadre dont le signe de référence est 190.

A cette étape, le contrôleur de réseau 14 évalue d'abord si le porteur qui est actuellement dans le premier sous-réseau SATVLAN 1 a une raison valable d'entrer dans un autre sous-réseau.

Une telle estimation s'appuie sur les informations disponibles pour le contrôleur de réseau 14.

Par exemple, si la transmission est meilleure dans l'autre sous-réseau, il semble favorable de basculer sur cet autre sous-réseau.

Plus généralement, le contrôleur de réseau 14 évalue selon un critère donné quel sous-réseau est le plus adapté pour l'aéronef 10.

Dans le cas où l'estimation et la vérification conduisent à choisir un basculement, le contrôleur de réseau 14 ordonne le basculement du porteur 10 sur un autre sous-réseau.

Il en résulte que le porteur 10 est maintenant attaché à un autre sous-réseau pour lequel la communication est de meilleure qualité.

Dans le procédé décrit, le rôle du contrôleur de réseau 14 est interprétable comme un gestionnaire de mobilité aussi nommé sous l'acronyme HOM renvoyant à la terminologie anglaise de « handover manager ». De plus, le contrôleur de réseau 14 fonctionne en liaison montante.

Ainsi, tout en assurant une bonne qualité de transmission pour le porteur 10, le procédé permet de garder la discrétion sur la position du porteur 10. De fait, le procédé fonctionne sans avoir de connaissance sur la position précise du porteur 10, la seule information étant le sous-réseau auquel appartient le porteur 10, sous-réseau qui correspond à une grande zone de couverture de plusieurs milliers de kilomètres carrés

De préférence, les informations ne comportent pas la position du porteur, le procédé restant fonctionnel même sans connaître la position du porteur.

## Revendications

1. Procédé de contrôle d'un réseau satellitaire, le réseau étant contrôlé par un contrôleur de réseau (14), le réseau étant formé d'une pluralité de sous-réseaux distincts couvrant une zone de couverture (Z1, Z2, Z3) prédéfinie, chaque sous-réseau étant contrôlé par un contrôleur de sous-réseau (16Z1, 16Z2, 16Z3), chaque sous-réseau étant propre à communiquer avec un porteur (10) sur la zone de couverture prédéfinie (Z1, Z2, Z3) du sous-réseau considéré, le porteur (10) appartenant à un instant donné à un unique sous-réseau, le contrôleur de réseau (14) étant distinct de chaque contrôleur de sous-réseau (16Z1, 16Z2, 16Z3), le procédé comportant les étapes de:
- fourniture d'informations par chaque contrôleur de sous-réseau (16Z1, 16Z2, 16Z3) au contrôleur de réseau (14), les informations comprenant le sous-réseau auquel appartient le porteur (10) à un instant donné, dit sous-réseau actuel, et la capacité des autres sous-réseaux, un autre sous-réseau étant un sous-réseau distinct du sous-réseau actuel, les informations comprenant également une information relative à la qualité de la transmission du porteur (10) sur le sous-réseau actuel,
- test de la qualité de la transmission du porteur (10) sur chacun des autres sous-réseaux adjacents au sous-réseau actuel,
l'étape de test comportant les étapes : le contrôleur de réseau ordonne au contrôleur de sous-réseau actuel de demander au porteur (10) d'émettre un signal de synchronisation sur chacun des autres sous-réseaux adjacents au sous-réseau actuel et le contrôleur de réseau reçoit, de chaque contrôleur des sous-réseaux adjacents au sous-réseau actuel, des rapports de transmission comprenant la qualité mesurée issue de la mesure de la qualité de transmission du signal de synchronisation mesurée, et l'émission d'un signal de synchronisation sur chaque sous-réseau adjacent par le porteur (10), et
- prise de décision d'un éventuel basculement du porteur (10) depuis le sous-réseau actuel sur un autre sous-réseau sur la base des informations fournies et des rapports de transmission, la prise de décision étant mise en œuvre par le contrôleur de réseau (14).

2. Procédé selon la revendication 1, dans lequel le procédé comporte, en outre, une étape de détection de la dégradation de la qualité de la transmission du porteur (10) sur le sous-réseau actuel par le contrôleur de réseau (14).

3. Procédé selon la revendication 1 ou 2, dans lequel l'étape de test comporte la transmission de l'ordre du contrôleur de réseau (14) depuis le contrôleur de sous-réseau (16Z1, 16Z2, 16Z3) du sous-réseau actuel vers le porteur (10).

4. Procédé selon la revendication 3, dans lequel l'étape de test comporte :
- la mesure par chaque sous-réseau adjacent de la qualité de transmission du signal de synchronisation émis vers le sous-réseau considéré, pour obtenir une qualité mesurée, et
- la transmission depuis chaque contrôleur de sous-réseau (16Z1, 16Z2, 16Z3) de chaque sous-réseau adjacent vers le contrôleur de réseau (14) de la qualité mesurée.

5. Procédé selon la revendication 4, dans lequel la prise de décision prend également en compte la qualité mesurée transmise par le contrôleur de sous-réseau (16Z1, 16Z2, 16Z3) de chaque sous-réseau.

6. Contrôleur de réseau (14) propre à contrôler un réseau satellitaire, le réseau étant formé d'une pluralité de sous-réseaux distincts couvrant une zone de couverture (Z1, Z2, Z3) prédéfinie, chaque sous-réseau étant contrôlé par un contrôleur de sous-réseau (16Z1, 16Z2, 16Z3), chaque sous-réseau étant propre à communiquer avec un porteur (10) sur la zone de couverture prédéfinie du sous-réseau considéré, le porteur (10) appartenant à un instant donné à un unique sous-réseau, le contrôleur de réseau (14) étant distinct de chaque contrôleur de sous-réseau (16Z1, 16Z2, 16Z3) et étant propre à :
- recevoir des informations émises par chaque contrôleur de sous-réseau (16Z1, 16Z2, 16Z3), les informations comprenant le sous-réseau auquel appartient le porteur (10) à un instant donné, dit sous-réseau actuel, et la capacité des autres sous-réseaux, un autre sous-réseau étant un sous-réseau distincts du sous-réseau actuel, les informations comprenant une information relative à la qualité de la transmission du porteur (10) sur le sous-réseau actuel,
- ordonner au contrôleur de sous-réseau actuel de demander au porteur (10) d'émettre un signal de synchronisation sur chacun des autres sous-réseaux adjacents au sous-réseau actuel,
- recevoir, de chaque contrôleur des sous-réseaux adjacents au sous-réseau actuel, des rapports de transmission comprenant la qualité mesurée issue de la mesure de la qualité de transmission du signal de synchronisation mesurée,
- prendre la décision d'un éventuel basculement du porteur (10) depuis le sous-réseau actuel sur un autre sous-réseau sur la base des informations fournies et des rapports de transmission.

7. Contrôleur de réseau selon la revendication 6, dans lequel le contrôleur de réseau (14) comporte un calculateur.

8. Réseau satellitaire formé d'une pluralité de sous-réseaux distincts couvrant une zone de couverture (Z1, Z2, Z3) prédéfinie et comprenant un contrôleur de réseau (14) selon la revendication 6 ou 7.

## Patentansprüche

1. Verfahren zum Steuern eines Satellitennetzwerks, wobei das Netzwerk von einer Netzwerk-Steuervorrichtung (14) gesteuert wird und das Netzwerk aus einer Mehrzahl von unterschiedlichen Subnetzen gebildet wird, die eine vorbestimmte Bedeckungszone (Z1, Z2, Z3) abdecken, wobei jedes Subnetz von einer Subnetz-Steuervorrichtung (16Z1, 16Z2, 16Z3) gesteuert wird und jedes Subnetz für eine Kommunikation mit einem Träger (10) in der vorbestimmten Bedeckungszone (Z1, Z2, Z3) des betrachteten Subnetzes geeignet ist, wobei der Träger (10) zu einem gegebenen Zeitpunkt zu einem einzigen Subnetz gehört und die Netzwerk-Steuervorrichtung (14) getrennt zu jeder Subnetz-Steuervorrichtung (16Z1, 16Z2, 16Z3) ist, wobei das Verfahren die Schritte aufweist:
- Beschaffen von Informationen von jeder Subnetz-Steuervorrichtung (16Z1, 16Z2, 16Z3) an die Netzwerk-Steuervorrichtung (14), wobei die Informationen das Subnetz, zu dem der Träger (10) zu einem bestimmten Zeitpunkt gehört, genannt aktuelles Subnetz, und die Kapazität der anderen Subnetze umfassen, wobei ein anderes Subnetz ein von dem aktuellen Subnetz verschiedenes Subnetz ist, wobei die Informationen auch Informationen bezüglich der Qualität der Übertragung des Trägers (10) auf dem aktuellen Subnetz umfassen,
- Prüfen der Qualität der Übertragung des Trägers (10) auf jedem der anderen Subnetze, die zu dem aktuellen Subnetz benachbart sind,
wobei der Schritt des Prüfens die Schritte aufweist: die Netzwerk-Steuervorrichtung weist die Steuervorrichtung des aktuellen Subnetzes an, den Träger (10) aufzufordern, ein Synchronisationssignal auf jedem der anderen Subnetze, die dem aktuellen Subnetz benachbart sind, zu senden, und die Netzwerk-Steuervorrichtung empfängt von jeder Steuervorrichtung der zu dem aktuellen Subnetz benachbarten Subnetze Übertragungsberichte, die die gemessene Qualität, die von der Messung der gemessenen Qualität der Übertragung des Synchronisationssignals und dem Senden eines Synchronisationssignals auf jedem benachbarten Subnetz durch den Träger (10) stammt, umfassen; und
- Entscheiden über eine mögliche Umschaltung des Trägers (10) aus dem aktuellen Subnetz in ein anderes Subnetz auf der Basis der gelieferten Informationen und der Übertragungsberichte, wobei das Entscheiden von der Netzwerk-Steuervorrichtung (14) durchgeführt wird.

2. Verfahren nach Anspruch 1, wobei das Verfahren ferner einen Schritt des Erfassens der Verschlechterung der Übertragungsqualität des Trägers (10) auf dem aktuellen Subnetz durch die Netzwerk-Steuervorrichtung (14) umfasst.

3. Verfahren nach Anspruch 1 oder 2, wobei der Schritt des Prüfens die Übertragung des Befehls der Netzwerk-Steuervorrichtung (14) von der Subnetz-Steuervorrichtung (16Z1, 16Z2, 16Z3) des aktuellen Subnetzes an den Träger (10) umfasst.

4. Verfahren nach Anspruch 3, bei dem der Schritt des Prüfens aufweist:
- Messen von jedem benachbarten Subnetz der Übertragungsqualität des an das betrachtete Subnetz gesendeten Synchronisationssignals, um eine gemessene Qualität zu erhalten, und
- Übertragen der gemessenen Qualität von jeder Subnetz-Steuervorrichtung (16Z1, 16Z2, 16Z3) jedes benachbarten Subnetzes an die Netzwerk-Steuervorrichtung (14).

5. Verfahren nach Anspruch 4, bei dem das Entscheiden auch die von der Subnetz-Steuervorrichtung (16Z1, 16Z2, 16Z3) jedes Subnetzes übertragene gemessene Qualität berücksichtigt.

6. Netzwerk-Steuervorrichtung (14), die geeignet ist, ein Satellitennetzwerk zu steuern, wobei das Netzwerk aus einer Mehrzahl von unterschiedlichen Subnetzen gebildet wird, die eine vorbestimmte Bedeckungszone (Z1, Z2, Z3) abdecken, wobei jedes Subnetz von einer Subnetz-Steuervorrichtung (16Z1, 16Z2, 16Z3) gesteuert wird und jedes Subnetz für eine Kommunikation mit einem Träger (10) in der vorbestimmten Bedeckungszone des betrachteten Subnetzes geeignet ist, wobei der Träger (10) zu einem gegebenen Zeitpunkt zu einem einzigen Subnetz gehört und die Netzwerk-Steuervorrichtung (14) unterschiedlich zu jeder Subnetz-Steuervorrichtung (16Z1, 16Z2, 16Z3) ist und geeignet ist:
- Informationen, die von jeder Subnetz-Steuervorrichtung (16Z1, 16Z2, 16Z3) gesendet werden, zu empfangen, wobei die Informationen das Subnetz, zu dem der Träger (10) zu einem gegebenen Zeitpunkt gehört, das als aktuelles Subnetz bezeichnet wird, und die Kapazität der anderen Subnetze umfassen, wobei ein anderes Subnetz ein von dem aktuellen Subnetz verschiedenes Subnetz ist, wobei die Informationen eine Information umfassen, die sich auf die Qualität der Übertragung des Trägers (10) auf dem aktuellen Subnetz bezieht,
- die Steuervorrichtung des aktuellen Subnetzes anzuweisen, den Träger (10) aufzufordern, ein Synchronisationssignal auf jedem der anderen Subnetze zu senden, die zu dem aktuellen Subnetz benachbart sind,
- von jeder Steuervorrichtung der zu dem aktuellen Subnetz benachbarten Subnetze Übertragungsberichte zu empfangen, die die gemessene Qualität, die aus der Messung der gemessenen Qualität der Übertragung des Synchronisationssignals stammt, enthalten,
- über eine mögliche Umschaltung des Trägers (10) aus dem aktuellen Subnetz in ein anderes Subnetz auf der Basis der gelieferten Informationen und der Übertragungsberichte zu entscheiden.

7. Netzwerk-Steuervorrichtung nach Anspruch 6, wobei die Netzwerk-Steuervorrichtung (14) einen Rechner aufweist.

8. Satellitennetzwerk, das aus einer Mehrzahl von verschiedenen Subnetzen gebildet ist, die eine vorbestimmte Bedeckungszone (Z1, Z2, Z3) abdecken, und das eine Netzwerk-Steuervorrichtung (14) nach Anspruch 6 oder 7 umfasst.

## Claims

1. A method for controlling a satellite network, the network being controlled by a network controller (14), the network being formed by a plurality of separate sub-networks covering a predefined coverage zone (Z1, Z2, Z3), each sub-network being controlled by a sub-network controller (16Z1, 16Z2, 16Z3), each sub-network being able to communicate with a carrier (10) over the predefined coverage zone (Z1, Z2, Z3) of the considered sub-network, the carrier (10) belonging to a single sub-network at a given moment, the network controller (14) being separate from each sub-network controller (16Z1, 16Z2, 16Z3), the method comprising the steps for:
- providing information by each sub-network controller (16Z1, 16Z2, 16Z3) to the network controller (14), the information comprising the sub-network to which the carrier (10) belongs at a given moment, called current sub-network, and the capacity of the other sub-networks, another sub-network being a sub-network separate from the current sub-network, the information also comprising information relative to the quality of the transmission of the carrier (10) over the current sub-network,
- testing the quality of the transmission of the carrier over each of the other sub-networks adjacent to the current sub-network,
the test step comprising the steps: the network controller orders the current sub-network controller to ask the carrier (10) to send a synchronization signal over each of the other sub-networks adjacent to the current sub-network and the network controller receives, from each controller of the sub-networks adjacent to the current sub-network, transmission reports comprising the measured quality coming from the measure of the transmission quality of the measured synchronization signal, and sending a synchronization signal over each adjacent sub-network by the carrier (10), and
- making a decision to potentially switch the carrier (10) from the current sub-network to another sub-network based on the provided information and on the transmission reports, the decision-making being done by the network controller (14).

2. The method according to claim 1, wherein the method further comprises a step for detecting the deterioration of the quality of the transmission of the carrier (10) over the current sub-network by the network controller (14).

3. The method according to claim 1 or 2, wherein the test step comprises transmitting the order of the network controller (14) from the sub-network controller (16Z1, 16Z2, 16Z3) of the current sub-network to the carrier (10).

4. The method according to claim 3, wherein the test step comprises:
- the measurement by each adjacent sub-network of the transmission quality of the synchronization signal sent to the considered sub-network, to obtain a measured quality, and
- the transmission of the measured quality from each sub-network controller (16Z1, 16Z2, 16Z3) of each adjacent sub-network to the network controller (14).

5. The method according to claim 4, wherein the decision-making also takes the measured quality transmitted by the sub-network controller (16Z1, 16Z2, 16Z3) of each sub-network into account.

6. A network controller (14) able to control a satellite network, the network being formed by a plurality of separate sub-networks covering a predefined coverage zone (Z1, Z2, Z3), each sub-network being controlled by a sub-network controller (16Z1, 16Z2, 16Z3), each sub-network being able to communicate with a carrier (10) over the predefined coverage zone of the considered sub-network, the carrier (10) belonging to a single sub-network at a given moment, the network controller (14) being separate from each sub-network controller (16Z1, 16Z2, 16Z3) and being able to:
- receive information sent by each sub-network controller (16Z1, 16Z2, 16Z3), the information comprising the sub-network to which the carrier (10) belongs at a given moment, called current sub-network, and the capacity of the other sub-networks, another sub-network being a sub-network separate from the current sub-network, the information comprising information relative to the quality of the transmission of the carrier (10) over the current sub-network,
- order the current sub-network controller to ask the carrier (10) to send a synchronization signal over each of the other sub-networks adjacent to the current sub-network,
- receive, from each controller of the sub-networks adjacent to the current sub-network, transmission reports comprising the measured quality coming from the measure of the transmission quality of the measured synchronization signal
- decide whether to switch the carrier (10) from the current sub-network to another sub-network based on the provided information and on the transmission reports.

7. The network controller according to claim 6, wherein the network controller (14) includes a computer.

8. A satellite network formed by a plurality of separate sub-networks covering a predefined coverage zone (Z1, Z2, Z3) and comprising a network controller (14) according to claim 6 or 7.
